# EUROPÄISCHE PATENTSCHRIFT

(11) **EP 0 934 543 B1**
(45) Veröffentlichungstag und Bekanntmachung des Hinweises auf die Patenterteilung: **23.08.2000**
(21) Anmeldenummer: 97947721.3
(22) Anmeldetag: 28.10.1997
(51) Int. Cl.: G02B 6/42, G02B 6/14

(54) **ANORDNUNG ZUM EINKOPPELN VON LICHT IN EIN ENDE EINES MEHRMODEN-LICHTWELLENLEITERS**
DEVICE FOR INJECTING LIGHT INTO THE END OF A MULTIMODE OPTICAL FIBRE
DISPOSITIF POUR INJECTER DE LA LUMIERE A L'EXTREMITE D'UNE FIBRE MULTIMODE

(30) Priorität: 28.10.1996 DE 19645295
(43) Veröffentlichungstag der Anmeldung: 11.08.1999
(73) Patentinhaber: SIEMENS AKTIENGESELLSCHAFT, 80333 München (DE)
(72) Erfinder: KROPP, Jörg-Reinhardt, D-12355 Berlin (DE)
(86) Internationale Anmeldenummer: DE9702574
(87) Internationale Veröffentlichungsnummer: WO9819193

(56) Entgegenhaltungen:
- DE-A- 3 617 799
- GB-A- 2 083 646
- US-A- 5 274 721
- US-A- 5 490 227
- "A SINGLE MODE FIBER DETECTOR RECEPTACLE WITH MODE FILTER" RESEARCH DISCLOSURE, Nr. 321, 1.Januar 1991, Seite 36 XP000163458
- PATENT ABSTRACTS OF JAPAN vol. 010, no. 169 (P-468), 14.Juni 1986 & JP 61 020913 A (MATSUSHITA DENKI SANGYO KK), 29.Januar 1986,
- PATENT ABSTRACTS OF JAPAN vol. 096, no. 009, 30.September 1996 & JP 08 122586 A (FUJITSU LTD), 17.Mai 1996,

## Beschreibung

Die Erfindung bezieht sich auf eine Anordnung zum Einkoppeln von Licht in ein Ende eines Mehrmoden-Lichtwellenleiters mittels eines Stiftstummels aus einem Einmoden-Lichtwellenleiter, bei der eingangsseitig eine das einzukoppelnde Licht auf eine Stirnseite des Stiftstummels fokussierende optische Einrichtung vorhanden ist und bei der der Stiftstummel mit seiner anderen Stirnseite an dem einen Ende des Mehrmoden-Lichtwellenleiters anliegt.

Eine derartige, aus der GB 2 083 646 A bekannte Anordnung dient zur Einkopplung von optischen Signalen eines Senders (Laserdiode) in eine optische Fernübertragungsleitung, die von einem Mehrmoden-Lichtwellenleiter gebildet ist. Dabei wird das einzukoppelnde Licht über eine Linse auf eine Stirnseite eines Abschnitts eines Einmoden-Lichtwellenleiter fokussiert. Der Abschnitt liegt mit seiner anderen Stirnseite dem einen Ende der optischen Übertragungsleitung gegenüber. Zwischen der Linse und der Stirnseite ist ein Material eingebracht, das an der Linse und/oder an der Stirnseite auftretende und unerwünscht zur Laserdiode zurückgelangende Reflexionen verhindern soll.

Mehrmoden-Lichtwellenleiter sind in großem Umfange insbesondere für die Übertragung von Informationen im Rahmen der Datenkommunikation über kürzere Entfernungen verlegt worden, weil sich mit solchen Lichtwellenleitern verhältnismäßig kostengünstige Datenübertragungssystem realisieren lassen. Ein Nachteil solcher Datenübertragungssysteme mit Mehrmoden-Lichtwellenleitern ist die von der Wellenlänge des verwendeten Lichts und dem jeweiligen Typ des Mehrmoden-Lichtwellenleiters abhängige Bandbreite, die im Vergleich zu Einmoden-Lichtwellenleitern verhältnismäßig klein ist. Die Bandbreite von Datenübertragungssystemen mit Mehrmoden-Lichtwellenleitern wird außerdem von der Art der verwendeten Lichtquelle und der Einkopplung des die jeweilige Information tragenden Lichtes in den Mehrmoden-Lichtwellenleiter nachteilig beeinflußt. Wird eine Lumineszenz-Diode als Lichtquelle verwendet, dann wird ein Mehrmoden-Lichtwellenleiter auf seiner Einkopplungs-Stirnseite in der Regel nahezu voll ausgeleuchtet, so daß fast alle Moden angeregt werden; wegen der Laufzeitunterschiede der verschiedenen Moden ist nur eine relativ geringe Bandbreite erreichbar. Bei Verwendung einer Laserdiode wird eine geringere Modenzahl im Mehrmoden-Lichtwellenleiter angeregt, insbesondere dann, wenn zusätzlich eine fokussierende optische Einrichtung zwischen der Laserdiode und dem Mehrmoden-Lichtwellenleiter eingesetzt wird.

Wird ein Abschnitt aus einem Einmoden-Lichtwellenleiter verwendet, kann durch den räumlich eng begrenzten Kern des Einmoden-Lichtwellenleiters die Zahl der angeregten Moden im nachgeordneten Mehrmoden-Lichtwellenleiter verringert werden. Allerdings ergibt sich in dem Abschnitt des Einmoden-Lichtwellenleiters aufgrund seiner Kürze, daß im Mantel des Einmoden-Lichtwellenleiters ein hoher Anteil des in den eingekoppelten Lichtes auftritt. Deshalb wird dann auch ein Teil dieses Lichtes in den Kern des Mehrmoden-Lichtwellenleiters eingekoppelt und regt höhere Moden an. Dadurch wird die Bandbreite des Mehrmoden-Lichtwellenleiters verringert.

Der Erfindung liegt die Aufgabe zugrunde, eine Anordnung zum Einkoppeln von Licht in ein Ende eines Mehrmoden-Lichtwellenleiters vorzuschlagen, die zu einer geringen Anzahl von angeregten Moden im Mehrmoden-Lichtwellenleiter führt und daher einer Übertragungseinrichtung mit einem Mehrmoden-Lichtwellenleiter eine relativ hohe Bandbreite verleiht.

Die Lösung dieser Aufgabe gelingt mit einer Anordnung mit den Merkmalen des Anspruchs 1.

Der Vorteil der erfindungsgemäßen Anordnung besteht darin, daß durch den Lichtabführbereich ein großer Teil des unvermeidbar in den Mantel des Einmoden-Lichtwellenleiters des Stiftstummels eingekoppelten Lichts nicht zu dem Mehrmoden-Lichtwellenleiter hin übertragen wird und somit den Kern des nachgeordneten Mehrmoden-Lichtwellenleiters nicht erreicht; dies ist darauf zurückzuführen, daß das Licht aus dem Mantel des Einmoden-Lichtwellenleiters des Stiftstummels seitlich austreten kann. Eine Anregung von Moden ist dadurch weitgehend unterdrückt und damit die Bandbreite des Mehrmoden-Lichtwellenleiters erhöht.

Als besonders vorteilhaft wird es angesehen, wenn der Lichtabführbereich an die eine Stirnseite des Stiftstummels angrenzt, weil dies eine relativ einfache Herstellung des Lichtabführbereichs zuläßt.

Wenn sich der Lichtabführbereich von der einen Stirnseite des Stiftstummels aus in axialer Richtung keilförmig verjüngt, wird dadurch das im Mantel des Einmoden-Lichtwellenleiters des Stiftstummels vorhandene Licht besonders wirkungsvoll ausgekoppelt; außerdem ist diese Ausgestaltung des Lichtabführbereichs fertigungstechnisch vorteilhaft ausführbar.

Der keilförmig verjüngte Lichtabführbereich der erfindungsgemäßen Anordnung kann in unterschiedlicher Weise hergestellt sein. Als besonders vorteilhaft wird es angesehen, wenn der keilförmig verjüngte Lichtabführbereich von einem ausgehärteten Werkstoff gebildet ist, der in flüssiger Form in eine keilförmige Ausnehmung an der einen Stirnseite des Stiftstummels eingebracht ist.

Als Werkstoff in flüssiger Form kommen unterschiedliche Materialien in Frage; als besonders vorteilhaft wird es wegen der leichten Handhabbarkeit und Verfügbarkeit angesehen, wenn der Werkstoff ein Klebstoff ist.

Der Stiftstummel kann auch eine Beschichtung aus einem optisch transparenten und nicht spiegelnden Werkstoff aufweisen. Bei diesem Werkstoff handelt es sich vorteilhafterweise um Glas, das hinsichtlich seines Brechungsindex höher als der Brechungsindex des Mantelwerkstoffs des Einmoden-Lichtwellenleiters des Stiftstummels sein muß.

Bei einer anderen vorteilhaften Ausführungsart der erfindungsgemäßen Anordnung weist der Lichtabführbereich eine hohe Lichtabsorption auf. Bei dieser Ausführungsform wird das aus dem Mantel des Einmoden-Lichtwellenleiters des Stiftstummels austretende Licht absorbiert und kann daher nicht mehr zum Mehrmoden-Lichtwellenleiter gelangen.

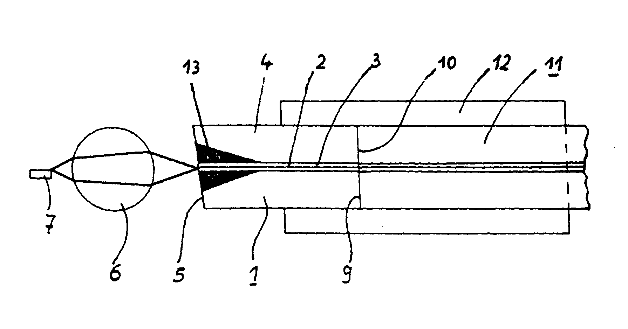

Zur weiteren Erläuterung der Erfindung ist in der Figur im Schnitt schematisch ein Ausführungsbeispiel der erfindungsgemäßen Anordnung dargestellt.

Die in der Figur gezeigte Anordnung enthält einen Stiftstummel 1 aus einem Einmoden-Lichtwellenleiter, der in üblicher Weise einen Kern 2 sowie einen den Kern umgebenden Mantel 3 enthält. Auf dem Mantel 3 ist in ebenfalls bekannter Weise eine Beschichtung 4 aufgebracht. An einer Stirnseite 5 ist dem Stiftstummel 1 eine im dargestellten Ausführungsbeispiel von einer Linse gebildete optische Einrichtung 6 vorgeordnet, mit der von einer Lichtquelle 7 ausgesandtes Licht 8 auf den Kern 2 des Stiftstummels 1 im Bereich seiner einen Stirnseite 5 fokussiert wird.

Mit seiner anderen Stirnseite 9 liegt der Stiftstummel 1 an einem Ende 10 eines Mehrmoden-Lichtwellenleiters 11 an, von dem in der Figur nur ein erster Abschnitt dargestellt ist. Der Stiftstummel 1 ist im Bereich seiner anderen Stirnseite 9 gemeinsam mit dem Mehrmoden-Lichtwellenleiter 11 von einem Verbindungselement 12 umgeben, das den Stiftstummel 1 und den Mehrmoden-Lichtwellenleiter 11 in einer definierten Lage im Bereich der anderen Stirnseite 9 des Stiftstummels 1 und dem einen Ende 10 des Mehrmoden-Lichtwellenleiters 11 hält.

Wie die Figur ferner zeigt, ist der Stiftstummel 1 im Bereich seiner einen Stirnseite 5 mit einem Lichtabführbereich 13 versehen, der sich von der einen Stirnseite 5 in Längsachse des Stiftstummels 1 nach innen hin verjüngt. Dieser Lichtabführbereich 13 ist dadurch gebildet, daß die Beschichtung 4 keilförmig im Bereich der einen Stirnseite 5 ausgenommen ist und dann in diesen ausgenommenen Bereich aushärtender Werkstoff, beispielsweise ein Klebstoff, eingebracht ist. Der aushärtende Werkstoff weist einen Brechungsindex auf, der höher als der Brechungsindex des Werkstoffs des Mantels 3 ist, so daß der im den Mantel 3 eingekoppelte Teil des auf die eine Stirnseite 5 des Stiftstummels 1 focussierten Lichts aus dem Mantel 3 in den Lichtabführbereich 13 übertreten kann. Über den Mantel 3 des Stiftstummels 1 wird daher nur noch sehr wenig Licht zu dem Mehrmoden-Lichtwellenleiter 11 geleitet, so daß eine Anregung von Moden in dem Mehrmoden-Lichtwellenleiter 11 weitgehend unterdrückt ist. Über den Mehrmoden-Lichtwellenleiter 11 lassen sich dann Nachrichten in Form von Lichtimpulsen aus der Lichtquelle 7 mit großer Bandbreite übertragen. Die entsprechende Ansteuerung der Lichtquelle 7, die vorzugsweise von einer Laserdiode gebildet ist, wurde im einzelnen figürlich nicht dargestellt, weil diese im Zusammenhang mit der vorliegenden Erfindung von untergeordneter Bedeutung ist.

## Patentansprüche

1. Anordnung zum Einkoppeln von Licht in ein Ende (10) eines Mehrmoden-Lichtwellenleiters (11), bestehend aus einem Stiftstummel (1) aus einem Einmoden-Lichtwellenleiter und aus einer fokussierenden optischen Einrichtung (6), wobei die fokussierende optische Einrichtung (6) so angeordnet ist, daß
das einzukoppelnde Licht auf eine Stirnseite (5) des Stiftstummels (1) fokussiert wird,
der Stiftstummel (1) mit seiner anderen Stirnseite (9) an dem einen Ende (10) des Mehrmoden-Lichtwellenleiters (11) anliegt,
der Stiftstummel (1) einen an seine eine Stirnseite (5) angrenzenden Lichtabführbereich (13) aufweist, in dem sein Mantel (3) von einer äußeren Beschichtung (4) aus einem Werkstoff mit einem höheren Brechungsindex als der Brechungsindex des Mantelswerkstoffs umgeben ist, und
sich der Lichtabführbereich (13) von der einen Stirnseite (5) des Stiftstummels (1) aus in axialer Richtung keilförmig verjüngt.

2. Anordnung nach Anspruch 1, bei der oder keilförmig verjüngte Lichtabführbereich (13) von einem ausgehärtetem Werkstoff gebildet ist, der in flüssiger Form in eine keilförmige Ausnehmung an der einen Stirnseite (5) des Stiftstummels (1) eingebracht ist.

3. Anordnung nach Anspruch 2, bei der der Werkstoff ein Klebstoff ist.

4. Anordnung nach einem der Ansprüche 1 bis 3, bei der der Lichtabführbereich (13) eine hohe Lichtabsorption aufweist.

## Claims

1. Arrangement for coupling light into one end (10) of a multi-mode optical fibre (11), comprising a pin stub (1) made of a monomode optical fibre, and a focussing optical device (6), the focussing optical device (6) being arranged in such a way that the light to be coupled in is focussed on to an end face (5) of the pin stub (1), the other end face (9) of the pin stub (1) rests against the one end (10) of the multi-mode optical fibre (11), the pin stub (1) has a light lead-off region (13) adjoining its one end face (5), in which region its cladding (3) is surrounded by an outer coating (4) made of a material having a higher refractive index than the refractive index of the cladding material, and the light lead-off region (13) tapers in a wedge-shaped manner from the one end face (5) of the pin stub (1) in the axial direction.

2. Arrangement according to claim 1, in which the light lead-off region (13) which tapers in a wedge-shaped manner is formed from a hardened material which is placed in liquid form in a wedge-shaped recess on the one end face (5) of the pin stub (1).

3. Arrangement according to claim 2, in which the material is an adhesive.

4. Arrangement according to one of claims 1 to 3, in which the light lead-off region (13) has a high light absorption.

## Revendications

1. Dispositif pour injecter de la lumière dans une extrémité (10) d'un guide (11) d'onde lumineuse multimode, constitué d'un tronçon (1) de broche d'un guide d'onde lumineuse monomode et d'un dispositif (6) optique de focalisation, le dispositif (6) optique de focalisation étant monté de telle manière que de la lumière à injecter est focalisée sur une face (5) frontale du tronçon (1 ) de broche, le tronçon (1) de broche s'appliquant par son autre face (9) latérale à l'une (10) des extrémités du guide (11) d'onde lumineuse multimode, le tronçon (1) de broche comportant une zone (13) de sortie de la lumière qui est adjacente à l'une (5) de ses faces latérales et dans laquelle sa gaine (3) est entourée d'un revêtement (4) extérieur en un matériau ayant un indice de réfraction plus grand que l'indice de réfraction du matériau de la gaine, et la zone (13) de sortie de la lumière se rétrécissant dans la direction axiale à partir de l'une (5) des faces frontales du tronçon (1) de broche.

2. Dispositif suivant la revendication 1, dans lequel la zone (13) de sortie de la lumière rétrécie de manière cunéiforme est formée par un matériau durci qui est introduit sous forme liquide dans un évidement cunéiforme ménagé sur l'une (5) des faces frontales du tronçon (1) en forme de broche.

3. Dispositif suivant la revendication 2, dans lequel le matériau est une colle.

4. Dispositif suivant l'une des revendications 1 à 3, dans lequel la zone (13) de sortie de la lumière a une grande absorption de la lumière.
